(19) Europäisches Patentamt
European Patent Office
Office européen des brevets

(11) **EP 2 660 371 A2**

(12) **EUROPEAN PATENT APPLICATION**
published in accordance with Art. 153(4) EPC

(43) Date of publication:
06.11.2013 Bulletin 2013/45

(51) Int Cl.:
*D01F 1/10* (2006.01)  *D01F 6/62* (2006.01)
*D01D 5/08* (2006.01)  *D02J 1/22* (2006.01)
*D03D 1/02* (2006.01)  *B60R 21/16* (2006.01)

(21) Application number: 11853975.8

(22) Date of filing: 30.12.2011

(86) International application number:
PCT/KR2011/010399

(87) International publication number:
WO 2012/091524 (05.07.2012 Gazette 2012/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 31.12.2010  KR 20100140316
29.12.2011  KR 20110145947

(71) Applicant: Kolon Industries, Inc.
Gwacheon-si, Gyeonggi-do 427-709 (KR)

(72) Inventors:
• KIM, Young-Jo
Gimpo-si
Gyeonggi-do 415-060 (KR)
• AN, Byoung-Wook
Incheon 407-765 (KR)
• LEE, Sang-Mok
Gumi-si
Gyeongsangbuk-do 730-020 (KR)
• LEE, Young-Soo
Gumi-si
Gyeongsangbuk-do 730-030 (KR)
• KIM, Gi-Woong
Daegu 706-020 (KR)

(74) Representative: Ter Meer Steinmeister & Partner
Me/bk
Mauerkircherstrasse 45
81679 München (DE)

(54) **POLYESTER FIBER AND METHOD FOR MANUFACTURING SAME**

(57) The present invention relates to a polyester yarn which can be used in a fabric for an airbag. Particularly, the present invention relates to a polyester yarn, in which a content of one or more inorganic fillers selected from the group consisting of $TiO_2$, $SiO_2$, and $BaSO_4$ is 200 ppm or less, a breaking elongation is 15% or more, a dry shirinkage rate is 3% or more, and the sum of the breaking elongation and the dry shirinkage rate is 20% or more, a production method thereof, and a fabric for an airbag produced therefrom.

The polyester yarn of the present invention has remarkably reduced stiffness and excellent mechanical properties of high strength, high elongation, and high shirinkage. Therefore, when applied to a fabric for an airbag, the polyester yarn provides excellent toughness, tear strength, edgecomb resistance, gas barrier performance, packing property, shape stability, and gas barrier effects while remarkably reducing stiffness, and minimizes the impact applied to a passenger, thereby safely protecting the passenger at the same time.

FIG. 2

Description

## BACKGROUND OF THE INVENTION

### (a) Field of the Invention

The present invention relates to a polyester yarn which can be used in a fabric for an airbag. More specifically, the present invention relates to a high-strength, high-elongation, and high-shirinkage polyester yarn which has excellent mechanical properties, shape stability, packing property or the like, a production method thereof, and a fabric for an airbag having excellent tear strength, edgecomb resistance, and toughness that is produced using the same.

### (b) Description of the Related Art

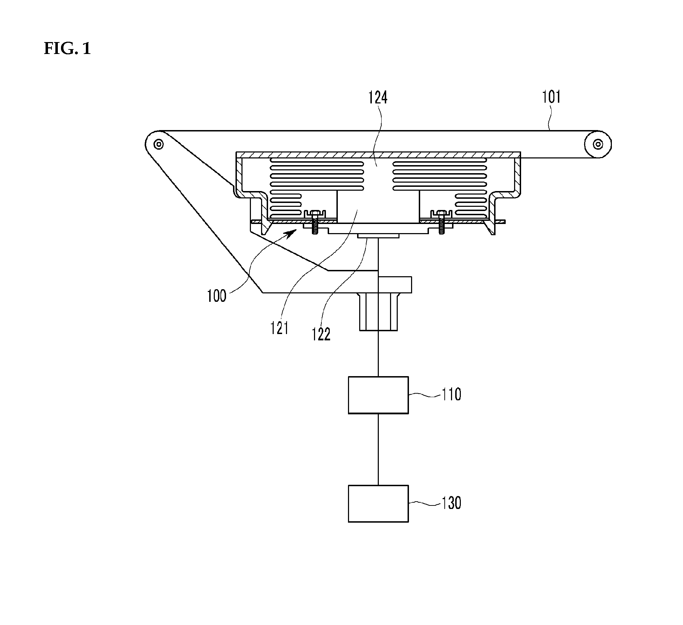

Generally, an airbag is a device for protecting a driver and passengers, in which a crash impact is detected by an impact detecting sensor when driving vehicles collide head-on at a speed of about 40 km/h or higher, and consequently, gunpowder explodes to supply gas into an airbag cushion to inflate the airbag. A general structure of an airbag system is depicted in FIG. 1.

As depicted in FIG. 1, the conventional airbag system includes: an inflator 121 that generates a gas by ignition of a detonator 122; an airbag module 100 that includes an airbag 124 that is expanded and unfolded toward a driver on the driver's seat by the  generated gas, and is installed in a steering wheel 101; an impact sensor 130 that gives an impact signal when the vehicle has crashed; and an electronic control module 110 that ignites the detonator 122 of the inflator 121 according to the impact signal. In such airbag system, the impact sensor 130 detects the impact and sends the signal to the electronic control module 110 when the vehicle collides head-on. At this time, the electronic control module 110 that received the signal ignites the detonator 122 and a gas generator in the inflator 121 is combusted. The combusted gas generator rapidly generates the gas to expand the airbag 124. The expanded airbag 124 contacts the front upper body of the driver and partially absorbs the impact load caused by the collision, and when the driver's head and chest go forward according to the law of inertia and smash against the airbag 124, it further absorbs the shock toward the driver by rapidly discharging the gas from the airbag 124 through discharging holes formed on the airbag 124. Therefore, the airbag effectively absorbs the shock that is delivered to the driver at the time of a collision, and can reduce secondary injuries.

As disclosed above, an airbag used in a vehicle is prepared in a certain shape and is installed in the steering wheel, door roof rails, or side pillars of the vehicle in a folded form so as to minimize its volume, and it is expanded and unfolded when the inflator 121 operates.

Therefore, it is very important that the airbag has folding property and flexibility for reducing the shock to the occupant in addition to good mechanical properties of the fabric for effectively maintaining the folding and packaging properties  of the airbag when it is installed in a vehicle, preventing damage to and rupture of the airbag itself, providing good unfolding properties of the airbag cushion, and minimizing the impact provided to the occupant. However, an airbag fabric that can maintain superior air-tightness and flexibility for the occupant's safety, sufficiently endure the impact applied to the airbag, and be effectively installed in a vehicle has not yet been suggested.

Previously, a polyamide fiber such as nylon 66 or the like has been used as the raw material of the fiber for an airbag. However, nylon 66 has superior impact resistance but has drawbacks of being inferior to a polyester fiber in terms of moisture and heat resistance, light resistance, and shape stability, and being expensive.

Meanwhile, Japanese patent publication No. Hei 04-214437 suggested the use of a polyester fiber for reducing such defects. However, when the airbag was prepared by using the prior polyester yarn, the fabric may be torn or the occupant may be injured by a strong instantaneous pressure due to insufficient strength and elongation at a moment of its unfolding. When the prior polyester yarn is used to produce the fabric for an airbag, there has been a limitation for maintaining sufficient mechanical property, air-tightness, and unfolding property under the severe conditions of high temperature and high humidity, because of the drops of strength and toughness.

Therefore, it is needed to develop a fiber yarn that maintains superior shape stability and gas barrier effect so as to be suitably used as a fabric for an airbag, and also maintains flexibility for reducing the impact applied to passengers, the packing property, and superior mechanical properties under severe conditions of high temperature and high humidity.

## SUMMARY OF THE INVENTION

It is an object of the present invention to provide a polyester yarn that secures superior shape stability, flexibility, and packing property so as to be used in a fabric for an airbag, and maintains sufficient performance under severe conditions of high temperature and high humidity.

It is another object of the present invention to provide a method of producing the polyester yarn.

It is still another object of the present invention to provide a fabric for an airbag that is produced by using the polyester yarn.

The present invention provides a polyester yarn, in which a content of one or more inorganic fillers selected from the group consisting of $TiO_2$, $SiO_2$, and $BaSO_4$ is 200 ppm or less, a breaking elongation is 15% or more, a dry shirinkage rate is 3% or more, and the sum of the breaking elongation and the dry shirinkage rate is 20 % or more.

Further, the present invention provides a method for producing the polyester yarn, including the steps of melt-spinning a polyester polymer having a content of one or more inorganic fillers selected from the group consisting of $TiO_2$, $SiO_2$, and $BaSO_4$ of 200 ppm or less at 270 to 300 °C so as to prepare an undrawn polyester yarn, and drawing the undrawn polyester yarn.

Furthermore, the present invention provides a fabric for an airbag that is produced by using the polyester yarn.

## BRIEF DESCRIPTION OF THE DRAWINGS

FIG. 1 is a view of a general airbag system; and

FIG. 2 is a schematic view showing a process of producing a polyester yarn according to an embodiment of the present invention.

## DETAILED DESCRIPTION OF THE EMBODIMENTS

Hereinafter, a polyester yarn according to specific embodiments of the present invention, a production method thereof, and a fabric for an airbag produced therefrom will be described in more detail. However, these are set forth to illustrate the present invention, and the scope of the present invention is not limited thereto. It will be obvious to those skilled in the art that various modifications and changes are possible within the scope of the present invention.

Additionally, as long as not particularly described in the entire specification, "includes" or "contains" means to include any component (or constituent) without particular limitation, and the addition of another component (or constituent) is not excluded.

A polyester fabric for an airbag may be produced by melt-spinning a polymer containing polyethylene terephthalate (hereinafter, referred to as "PET") to prepare an  undrawn yarn, drawing the undrawn yarn to obtain a drawn yarn (namely, yarn), and weaving the polyester yarn. Therefore, the characteristics of the polyester yarn are directly or indirectly reflected in the physical properties of a polyester fabric for an airbag.

Particularly, in order to apply the polyester to the fiber for an airbag instead of the prior polyamide fiber such as nylon 66 or the like, the disadvantages of the prior polyester yarns such as a low folding property due to its high modulus and stiffness, a reduction in physical properties under severe conditions of high temperature and high humidity due to its low melt heat capacity, and a decline in unfolding performance thereby must be overcome.

Polyester has a stiffer structure than nylons in terms of molecular structure, and thus has a characteristic of high modulus. Therefore, the packing property remarkably deteriorates, when it is used in a fabric for an airbag and installed in a vehicle. Furthermore, carboxyl end groups (hereinafter, referred to as "CEG") in the polyester molecular chain attack ester bonds under high-temperature and high-humidity conditions to cut the chain, and it causes deterioration of the physical properties after aging.

Accordingly, in the polyester yarn of the present invention, the content of the inorganic filler such as $TiO_2$ is minimized, a high-viscosity chip is used to secure the yarn having a high molecular weight, and the undrawn yarn is drawn at a minimum draw ratio during the drawing process for orientation to optimize the range of physical  properties such as elongation and shirinkage rate, thereby maintaining excellent toughness, tear strength, edgecomb resistance, and gas barrier performance while remarkably reducing stiffness. Therefore, the polyester yarn of the present invention can be effectively applied to the fabric for an airbag.

Particularly, the results of the present inventor's experiments revealed that a fabric for an airbag is produced from the polyester yarn having the predetermined characteristics, thereby having more improved folding property, shape stability, and gas barrier effect. When installed in a vehicle, the fabric for an airbag can maintain superior packing property, and superior mechanical properties, air-leakage protection, air-tightness or the like, even under severe conditions of high temperature and high humidity.

According to one embodiment of the present invention, the present invention provides a polyester yarn having the predetermined characteristics. In the polyester yarn, a content of one or more inorganic fillers selected from the group consisting of $TiO_2$, $SiO_2$, and $BaSO_4$ may be 200 ppm or less, a breaking elongation may be 15% or more, a dry shirinkage rate may be 3% or more, and the sum of the breaking elongation and the dry shirinkage rate may be 20 % or more.

It is preferable that the polyester yarn includes poly(ethylene terephthalate)(PET) as a main component. In this regard, various additives may be included in the PET during the production steps thereof, and thus the yarn may include at least 70 mol% or more, and more preferably 90 mol% or more, in order to show the physical properties suitable for the fabric for an airbag. Hereinafter, the term PET means a polymer including PET of 70 mol% or more unless any special explanation is given.

The polyester yarn according to one embodiment of the present invention has a characteristic of having a minimum content of the inorganic filler such as $TiO_2$, $SiO_2$, $BaSO_4$ or the like, that is, a minimum content of 200 ppm or less, or 0 to 200 ppm, preferably 150 ppm or less, or 0 to 150 ppm, more preferably 100 ppm or less, or 0 to 100 ppm, and much more preferably 50 ppm or less, or 0 to 50 ppm.

Generally, the polyester yarn includes various additives such as a matting agent, a pigment, a dye, a heat stabilizer, an antifoaming agent, a fixing agent, a flame retardant, an antioxidant, a UV absorber, an IR absorber, a crystal nucleus agent, a fluorescent whitening agent or the like, in order to improve reeling and spinning properties and to provide various physical properties for the yarn during the production process. However, when the content of $TiO_2$, $SiO_2$, $BaSO_4$ or the like in the prior polyester yarn exceeds the predetermined range, the elongation becomes insufficient and the shirinkage rate is remarkably reduced to problematically cause the tear of the fabric when applied as the fabric for an airbag.

In particular, when the polyester yarn includes the inorganic filler at a predetermined level or more, the inorganic filler functions excessively as the crystal nucleus agent to increase crystallinity and to slow down the shirinkage behavior of the molecular chains in the non-crystalline region, thereby reducing the shirinkage rate and the stretching behavior. In other words, when the content of the inorganic filler such as $TiO_2$ or the like exceeds the predetermined range, a reduction in the shirinkage rate and elongation is caused. When the physical properties of the polyester yarn including the inorganic filler over the predetermined range are measured, characteristics of low elongation and/ or low shirinkage rate are exhibited because stress is concentrated in the inorganic filler particles such as $TiO_2$ upon stretching it and thus the yarn is cut before it is sufficiently stretched.

Therefore, the polyester yarn of the present invention includes the inorganic filler such as $TiO_2$ at a minimum amount of 200 ppm or less, or preferably no inorganic filler, thereby satisfying both high elongation and high shirinkage and being used to produce a fabric for an airbag having excellent mechanical properties of high-strength and unfolding performance.

Further, as the melt-spinning process of a polyester polymer is performed using a polymer chip at a low temperature, the decomposition of the polyester polymer is minimized to maintain high intrinsic viscosity and to secure high molecular weight, thereby obtaining a high-strength yarn even though a subsequent drawing process is not performed at a high draw ratio. Otherwise, the process should be performed at a high draw ratio in order to achieve the physical properties. As such, when the process is performed at a high draw ratio, the degree of orientation thereof increases such that the fiber may have the physical properties of low elongation. It can be seen that the low-drawing process and the low-temperature spinning process of the polymer chip are performed to obtain a polyester yarn having the above descried excellent physical properties of high strength, high elongation, and high shirinkage.

As described below, a production process of the polyester yarn of the present invention is performed by optimizing the proper amounts of the inorganic particles and the polymer chip, and the proper drawing process, so as to achieve the physical properties of high strength, high elongation, and high shirinkage. Particularly, the sum of the breaking elongation and the shirinkage rate of the polyester yarn of the present invention is represented by elongation of the processed fabric, and thus the yarn must have the predetermined elongation and shirinkage rate, which means that the fabric for an airbag maintains a predetermined elongation value. In other words, it can be expressed that the fabric has high toughness. The increased toughness of the fabric is advantageous in absorbing impact. In addition, inorganic particles, in particular, $TiO_2$ or the like transfer heat to the interior of the fabric at high-temperature environment upon unfolding the airbag, which causes damage to fabrics. Consequently, rupture of the airbag may occur when a high-temperature inflator is used. $TiO_2$ or the like leave the surface during the reeling process to reduce friction on roller and guide during the drawing process, thereby minimizing damage to the yarn. Thus, it is possible to perform the high drawing process. When a small amount thereof is used, the draw ratio cannot be increased during the reeling process. Therefore, in order to realize the physical properties without increasing the draw ratio, a high-viscosity chip must be used. Accordingly, the draw ratio and viscosity of the chip may be restricted depending on the content of $TiO_2$ or the like through the after-mentioned process optimization.

As described above, the polyester yarn of the present invention is produced by minimizing the content of the inorganic filler such as $TiO_2$, $SiO_2$, $BaSO_4$ or the like, and by optimizing the melt-spinning and drawing processes, so as to exhibit lower crystallinity than the previously known PET yarn due to orientation-induced crystallization. The polyester yarn of the present invention may exhibit crystallinity of 40 % to 52%, preferably 41% to 51%, and more preferably 42 % to 50%. Owing to the optimized crystallinity, the fabric for an airbag produced from the polyester yarn is able to show the characteristics of high elongation and high shirinkage, together with high mechanical properties. If crystallinity of the yarn is too low, for example, less than 40%, it is difficult to maintain sufficient mechanical properties such shrinkage stress and toughness when the yarn is applied to the fabric for an airbag. In contrast, if crystallinity of the yarn is too high, for example, exceeds 52% to be excessively high, stiffness excessively increases to reduce processability and flexibility, which causes a great reduction in the folding property, flexibility, and packing property of the fabric for an airbag obtained therefrom. Thus, there are difficulties in its practical application or commercialization.

Further, the polyester yarn of the present invention is characterized in that it is produced under the after-mentioned melt-spinning and drawing conditions so as to have the breaking elongation and the dry shirinkage rate at the predetermined optimized range. That is, the polyester yarn may have the breaking elongation of 15 % or more, or 15 % to 32%, and preferably 15.5% or more, or 15.5% to 30%, and the dry shirinkage rate of 4.0 % or more, or 4. 0 % to 13%, and preferably 4.2 % or more, or 4.2 % to 12.5%. Further, the sum of the breaking elongation and the dry shirinkage of the yarn may be 20 % or more, or 20 % to 45%, and preferably 20.5% or more, or 20.5% to 42.5%. Owing to this low-drawing property, the fabric for an airbag produced from the polyester yarn is able to exhibit excellent folding property, flexibility, and packing property by solving the high stiffness problem of the known PET fabrics.

In the present invention, for effective absorption of impact energy instantaneously generated upon unfolding the airbag, both the breaking elongation and the dry shirinkage rate of the yarn are controlled in an optimum range to enhance the mechanical properties and folding property of the final woven fabric. The high strength, high elongation and high dry shirinkage rate are necessary in order for the fabric to safely absorb the impact energy of the gas instantaneously generated upon explosion of gunpowder in the airbag at the early stage, and to have excellent folding property together with excellent toughness and tear strength to get unfolded effectively. Generally, strength and elongation properties of the yarn are optimized for high strength property of the airbag. In this case, as the elongation increases, the shirinkage rate decreases, and tear strength is reduced when the fabric for an airbag is produced from the yarn, causing the tear upon unfolding the airbag. Therefore, it is required that both the breaking elongation and dry shirinkage rate of the yarn of the present invention satisfy the above range.

In particular, the breaking elongation of the yarn, namely, its elongation is maintained above 15% to secure high toughness and flexibility. Finally, when the yarn is applied to the fabric for an airbag, the fabric is able to sufficiently absorb high-temperature and high-pressure gas energy and have excellent folding property to provide excellent packing and unfolding properties when installed in a vehicle. Together with such breaking elongation, the yarn of the present invention maintains the dry shirinkage rate above 4.0%, so as to prevent yarn breakage by trembling of threads due to high relaxation ratio or high temperature of godet roller during the actual reeling process and to improve the reeling property. When the yarn is woven as a fabric, the fabric has improved tear strength and breaking resistance due to its smooth width axis. Simultaneously, the sum of the breaking elongation and the dry shirinkage rate of the yarn may be 20% or more, because elongation of the processed fabric for an airbag can be represented by the sum of the elongation and the shirinkage rate of the yarn. When applied to the fabric for an airbag, it is preferred in terms of toughness and packing property of the fabric. Occasionally, the sum may be 19.0% or less in terms of spinning and reeling properties of the yarn for an airbag and workability of the fabric. Owing to these characteristics, the fabric for an airbag produced from the polyester yarn is able to obtain superior strength and elongation, toughness, tear strength, edgecomb resistance, and gas barrier performance to the known polyester fabrics.

Therefore, it is possible to produce the fabric for an airbag showing superior mechanical properties, packing property, shape stability, impact resistance, and gas barrier effect at the same time by using the polyester yarn having the optimized inorganic filler content, elongation, and dry shirinkage rate, preferably, high intrinsic viscosity. Consequently, the fabric for an airbag having superior impact resistance, shape stability, mechanical properties, and air-tightness while exhibiting lower stiffness, and higher folding property, flexibility, and packing property can be obtained by using the polyester yarn. Such a polyester fabric for an airbag exhibits excellent mechanical properties, shape stability and gas barrier effect, provides excellent folding property and packing property for an airbag at the same time when the airbag is mounted in the narrow space of a vehicle, and allows an airbag to have high flexibility to minimize the impact applied to a passenger, thus safely protecting the passenger. Therefore, the fabric can be preferably applied to the fabric for an airbag, or the like.

Meanwhile, the yarn may exhibit toughness of $30 \times 10^{-1}$ g/d or more, or $30 \times 10^{-1}$ g/ d to $46 \times 10^{-1}$ g/d, and preferably $31 \times 10^{-1}$ g/ d or more, or $31 \times 10^{-1}$ g/ d to $44 \times 10^{-1}$ g/ d. As described above, when the polyester yarn of the present invention has the content of inorganic filler such as $TiO_2$ or the like, the breaking elongation, and the dry shirinkage rate within the optimum range, it can secure excellent physical properties such as strength and elongation and stiffness, and can exhibit excellent performance when it is formed into a fabric for an airbag.

Preferably, the polyester yarn of the present invention may have a shirinkage stress of 0.005 to 0.075 g/d at 150 °C corresponding to a laminate coating temperature of a general coating fabric, and may have a shirinkage stress of 0.005 to 0.075 g/d at 200 °C corresponding to a sol coating temperature of a general coating fabric. That is, when each of the shirinkage stresses at 150 °C and 200 °C is 0.005 g/d or more, it is possible to prevent a fabric from becoming slack by heat during a coating process, and when each of the shirinkage stresses is 0.075 g/d or less, the relaxation stress of a fabric can be decreased when the fabric is cooled at room temperature after the coating process. The shirinkage stress is based on the value measured under a fixed load of 0.10 g/d.

Further, the single yarn fineness of the polyester yarn may be 0.5 to 20 denier, and preferably 2.0 to 10.5 denier.

The polyester yarn must maintain low fineness and high strength in terms of packing property so that the polyester yarn is effectively used in the fabric for an airbag. Accordingly, the applicable total fineness of the yarn may be 200 to 1000 denier, preferably 220 to 840 denier, and more preferably 250 to 600 denier. Furthermore, it is preferable that the number of filaments of the yarn may be 50 to 240, preferably 55 to 220, and more preferably 60 to 200, because a greater number of filaments of the yarn can give a softer touch but too many filaments are not good in terms of spinnability.

Meanwhile, another embodiment of the present invention provides a method for producing the above-mentioned polyester yarn. The polyester yarn may be produced by a method including the steps of melt-spinning polyester polymers, for example, PET chips to prepare an undrawn yarn, and drawing the undrawn yarn. As described above, a polyester yarn having the above-mentioned physical properties can be produced by directly and indirectly reflecting the specific conditions or procedures of each step in the physical properties of the polyester yarn.

The method for producing the polyester yarn of the present invention include the steps of melt-spinning polyester polymers having a content of one or more inorganic fillers selected from the group consisting of $TiO_2$, $SiO_2$, and $BaSO_4$ of 200 ppm or less at 270 to 300 °C to prepare an undrawn polyester yarn, and drawing the undrawn polyester yarn.

Particularly, in order to provide the above mentioned physical properties of high strength, high elongation, and high shirinkage for the polyester yarn used in industrial applications such as airbag, it is necessary to optimize the amounts of the inorganic particles and the polymer chip and the proper drawing process. Therefore, the present invention revealed that a polyester yarn having the content of one or more inorganic fillers selected from the group consisting of $TiO_2$, $SiO_2$, and $BaSO_4$ of 200 ppm or less, the breaking elongation of 15% or more, the dry shirinkage rate of 3% or more, and the sum of the breaking elongation and the dry shirinkage rate of 20% or more can be obtained through the process optimization as follows. Here, the process may be optimized for better combination of viscosity of the inorganic filler and the used chip with the draw ratio in the drawing process which is performed for orientation of the undrawn yarn to achieve the physical properties of the yarn.

Further, it is also revealed that it is possible to minimize the content of carboxyl end group (CEG) through optimization of the melt-spinning and drawing processes, which exists as an acid under a high humidity condition to cause scission of basic molecular chains of the polyester yarn. Therefore, such polyester yarn has the minimum content of the inorganic filler, and the elongation and the dry shirinkage rate within the optimum range at the same time, and may be preferably applied to the fabric for an airbag having superior mechanical properties, packing property, shape stability, impact resistance, and gas barrier effect.

The process optimization may be performed by controlling the function value of the following Calculation Formula 1 (S3, wherein S3 represents $a_1 + a_2 + a_3$), based on the content of the inorganic filler in the polyester polymer, the intrinsic viscosity of the polyester polymer, and the draw ratio during the drawing process, in the range from 50 to 190.

[Calculation Formula 1]

$$50 \leq a_1 + a_2 + a_3 \leq 190$$

wherein $a_1$ is the absolute value of the inorganic filler content (ppm) in the polyester polymer,

$a_2$ is the value resulting from multiplying the absolute value of the intrinsic viscosity (dl/g) of the polyester polymer by 10, that is, represented by 'intrinsic viscosity (dl/g) of chip $\times$ 10', and

$a_3$ is the value resulting from multiplying the draw ratio in the drawing process by 10, that is, represented by 'draw ratio $\times$ 10'.

In this regard, when S3 of combination of the three factors, $a_1$, $a_2$, and $a_3$, that is, the sum of $a_1$ representing 'the content of one or more inorganic fillers selected from the group consisting of $TiO_2$, $SiO_2$, and $BaSO_4$', $a_2$ representing 'the value of multiplying the intrinsic viscosity of the chip by 10', and $a_3$ representing 'the value of multiplying the draw ratio from the undrawn yarn to the drawn yarn by 10', is less than 50, it is difficult to obtain the strength and the breaking elongation because of the low viscosity of the chip and the low draw ratio. Further, when S3 exceeds 190, the content of the inorganic particles is too high, and thus they excessively function as the crystal nucleus agent to increase crystallinity and to slow down the shirinkage behavior of the molecular chains in the non-crystalline region, thereby reducing the shirinkage rate. In addition, stress is concentrated in the inorganic filler to cause breakage of the yarn before it is sufficiently stretched, and therefore it is difficult to obtain excellent characteristics of high elongation and/ or high shirinkage.

In the present invention, accordingly, the process is optimized to maintain the sum of $a_1$, $a_2$, $a_3$, namely, S3 within the optimum range, as shown in Calculation Formula 1, and then the polyester production process is performed to produce the fabric for an airbag that satisfies both high elongation and high shirinkage, and has remarkably reduced stiffness and excellent toughness, tear strength, edgecomb resistance, and gas barrier performance.

Hereinafter, a method of producing the polyester yarn will be described in more detail with respect to each step.

First, the melt-spinning and drawing processes according to the present invention will be briefly described with reference to the attached drawings such that it can be easily carried out by a person with ordinary skill in the related art.

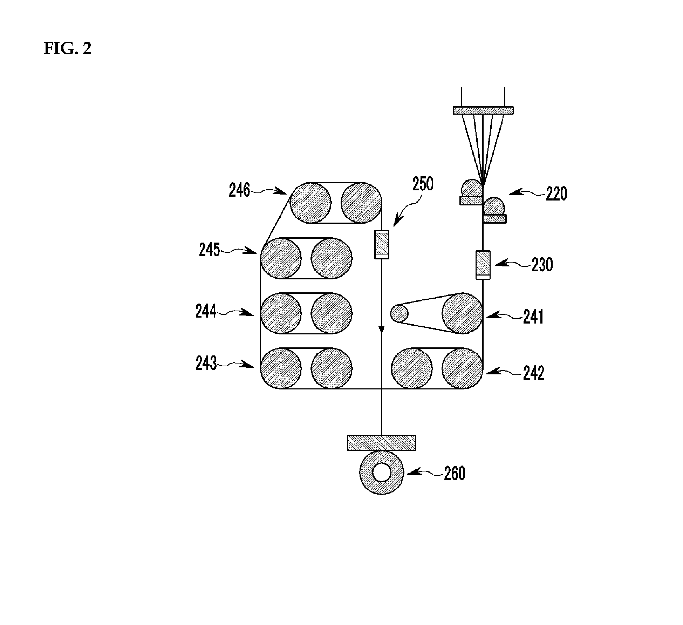

FIG. 2 is a schematic view showing a process of producing a polyester yarn, including the melt-spinning and drawing steps, according to an embodiment of the present invention. As shown in FIG. 2, in the method of producing the polyester yarn for an airbag of the present invention, the polyester polymer prepared in the above described manner is melted, the molten polymer is spun by a spinning nozzle and cooled by quenching air, an emulsion is provided to the undrawn yarn using an emulsifying roll (or oil jet) 220, and then the emulsion provided to the undrawn yarn is uniformly dispersed at a predetermined pressure using a pre-interlacer 230. Subsequently, the undrawn yarn is drawn by multi-step drawing rollers 241 to 246, the drawn yarns are intermingled at a predetermined pressure by a second interlacer 250, and then the intermingled drawn yarn is rolled by a winding roller 260, so as to produce a yarn.

In the production method of the present invention, a high-viscosity polyester polymer may be produced and used in order to produce a high-shirinkage polyester yarn with high-strength and high-elongation that can be effectively used in the fabric for an airbag.

In the present invention, the polyester polymer has the characteristic of having the minimum content of the inorganic filler such as $TiO_2$, $SiO_2$, $BaSO_4$ or the like, that is, the minimum content of 200 ppm or less, or 0 to 200 ppm, preferably 150 ppm or less, or 0 to 150 ppm, more preferably 100 ppm or less, or 0 to 100 ppm, and much more preferably 50 ppm or less, or 0 to 50 ppm.

In this regard, in order to obtain the undrawn polyester yarn satisfying the dry shirinkage rate and the elongation within the predetermined optimized range, the melt-spinning process is preferably performed at a low temperature such that the thermal decomposition of the polyester polymer is minimized. Particularly, in order to minimize the deterioration in physical properties such as intrinsic viscosity and CEG content of the high-viscosity polyester polymer, that is, in order to maintain high viscosity and low CEG content of the polyester polymer, the spinning process may be performed at a low temperature, for example, 270 to 300 °C, preferably 275 to 300 °C, and more preferably 280 to 300 °C. Here, spinning temperature designates the extruder's temperature. When the melt-spinning process is performed at higher than 300 °C, a large amount of the polyester polymer is thermally decomposed, and thus the intrinsic viscosity thereof becomes low, resulting in a decrease in the molecular weight thereof and an increase in the CET content thereof. Undesirably, the physical properties of the yarn can be deteriorated by the surface damage of the yarn. In contrast, when the melt-spinning process is performed at lower than 270 °C, it is difficult to melt the polyester polymer, and the spinnability may be deteriorated due to N/Z surface cooling. Therefore, it is preferred that the melt-spinning process is performed in the above temperature range.

From the test results, it was found that, when the melt-spinning process of the polyester polymer is performed at such a low temperature, the decomposition of the polyester polymer is minimized to maintain high viscosity and high molecular weight, and thus a high-strength polyester yarn can be obtained in a subsequent drawing process without applying a high draw ratio, and therefore, the modulus thereof can be effectively lowered by the low drawing process, thereby obtaining a polyester yarn satisfying the above-mentioned physical properties.

Further, in the melt-spinning process, the spinning rate of the polyester polymer can be adjusted, for example, in the range of 300 to 1,000 m/min, and preferably 350 to 700 m/min in order to perform the melt-spinning process under low spinning tension, that is, in order to minimize spinning tension, in terms of minimizing the decomposition of the polyester polymer. As such, the process of melt-spinning the polyester polymer is selectively performed under a low spinning tension and a low spinning rate, so that the decomposition of the polyester polymer can be further minimized.

Meanwhile, the undrawn yarn obtained by such a melt-spinning process may have an intrinsic viscosity of 0.8 dl/g or more, or 0.8 to 1.2 dl/g, preferably 0.85 dl/g or more, or 0.85 to 1.2 dl/g, and more preferably 0.9 dl/ g or more, or 0.90 to 1.2 dl/g.

Particularly, in order to produce the high-shirinkage polyester yarn with high-strength and high-elongation, as described above, a high-viscosity polyester polymer, for example, a polyester polymer having an intrinsic viscosity of 0.85 dl/g or more is used in the process of producing the undrawn yarn, and the high viscosity range is maintained as much as possible during the melt-spinning and drawing processes so that high strength can be obtained even by a low-drawing process and the elongation and the dry shirinkage rate can be effectively increased. In order to prevent scission of the molecular chain due to the increasing melting temperature of the polyester polymer and the pressure increase due to the discharge rate in the spinning pack, the intrinsic viscosity must be preferably 2.0 dl/g or less.

As described above, when the thermal decomposition of the polyester polymer having high viscosity is suppressed by melt-spinning the polyester polymer under the condition of low temperature, the difference in intrinsic viscosity between the polyester polymer and the polyester yarn can be minimized. For example, melt-spinning and subsequent processes may be performed such that the difference in intrinsic viscosity between the polyester polymer and the polyester yarn is 0.5 dl/g or less, or 0 to 0.5 dl/g, and preferably 0.4 dl/g or less, or 0.1 to 0.4 dl/g. Preferably, the polyester polymer includes poly(ethylene terephthalate)(PET) as a main component, and may include preferably 70 mol% or more, and more preferably 90 mol % or more thereof in order to secure mechanical properties as the yarn for the airbag.

As such, in the present invention, the polyester yarn having both excellent mechanical properties and elongation can be obtained, and the yarn having high-strength, high-elongation, and high-shirinkage suitable for the fabric for an airbag can be produced by minimizing the inorganic filler content of the polyester polymer and by suppressing the decrease in intrinsic viscosity thereof.

It is preferred that the polyester polymer, for example, PET chip is spun by a spinning nozzle designed such that the monofilament fineness is 0.5 to 20 denier, and preferably 1 to 15 denier. That is, it is preferred that the monofilament fineness must be 1.5 denier or more in order to reduce the possibility of a monofilament being cut during spinning and the possibility of a monofilament being cut by interference during cooling, and that the monofilament fineness must be 15 denier or less in order to increase cooling efficiency.

Further, after the polyester polymer is melt-spun, a cooling process is performed to prepare an undrawn polyester yarn. The cooling process may be preferably performed by applying cooling air at 15 to 60 °C, and the flow rate of the cooling air may be preferably adjusted to 0.4 to 1.5 m/s at each cooling air temperature. By this means, an undrawn polyester yarn having physical properties according to an embodiment of the present invention can be more easily prepared.

Meanwhile, after an undrawn polyester yarn is prepared by the spinning step, the prepared undrawn yarn is drawn to produce a drawn yarn. In this case, the drawing process may be performed under a condition of a total draw ratio of 5.0 to 6.0, and preferably 5.0 to 5.8. The undrawn polyester yarn is present in a state in which the high intrinsic viscosity and low initial modulus thereof are maintained and the CEG content in the molecule thereof is minimized by optimization of melt-spinning process. Therefore, when the drawing process is performed at a high draw ratio of more than 6.0, the undrawn polyester yarn is excessively drawn, so that the produced drawn yarn may be cut or mowed and may have low elongation and high modulus because of high fiber orientation. Particularly, in the case where the elongation of the yarn decreases and the modulus thereof increases at such a high draw ratio, the folding and packing properties may become poor when this polyester yarn is applied to a fabric for an airbag. Conversely, when the drawing process is performed at a relatively low draw ratio, the strength of the produced polyester yarn may partially decrease due to low fiber orientation. However, in terms of physical properties, when the drawing process is performed at a draw ratio of 5.0 or more, it is possible to produce a high-strength and low-modulus polyester yarn suitable for being applied to a fabric for an airbag. Therefore, it is preferred that the drawing process is performed at a draw ratio of 5.0 to 6.0.

According to another proper embodiment of the present invention, the method of preparing the polyester fiber may include the drawing, thermally fixing, relaxing, and winding processes through multi-step godet rollers from the melt-spinning process of the high-viscosity polyester polymer chip to the winding process by the winder, in order to produce the polyester yarn satisfying both high strength and high elongation, and high shirinkage by direct spinning and drawing processes.

The drawing process may be performed after passing the undrawn polyester yarn through a godet roller with an oil pickup amount of 0.2 % to 2.0%.

In the relaxation process, the relaxation ratio may be preferably 1% to 7%, and more preferably 1.1% to 6.8%. When the relaxation ratio thereof is less than 1.0%, high tension is applied to the yarn to cut the yarn. When the relaxation ratio thereof is more than 7.0%, it is difficult to achieve high shirinkage rate, and thus excellent gas barrier effect cannot be obtained during manufacture of the fabric for an airbag.

In the drawing process, a heat fixation process of heat-treating the undrawn yarn at a temperature of 190 to 245 °C may be additionally performed. Preferably, for the proper drawing process, the undrawn polyester yarn may be heat-treated at a temperature of 195 to 245 °C. Here, when the temperature is lower than 190 °C, thermal effects are insufficient, and the relaxation efficiency becomes low, and thus it is difficult to realize an appropriate shirinkage rate. When the temperature is higher than 245 °C, the relaxation efficiency becomes high to show low shirinkage rate, and thus it is difficult to produce the fabric for an air having excellent air-tightness due to high shirinkage.

In this case, the winding speed may be 2,000 to 4,000 m/min, and preferably 2,500 to 3,700 m/min.

Still another embodiment of the present invention provides a polyester fabric for an airbag including the above-mentioned polyester yarn.

In the present invention, the term "fabric for an airbag" refers to "a fabric or nonwoven fabric" used to manufacture an airbag for vehicles, and is characterized in that it is manufactured using the polyester yarn produced by the above process.

Particularly, in the present invention, when a high-shirinkage polyester yarn with high strength and high elongation is used instead of the prior polyester fabric with high strength and low elongation, a polyester fabric for an airbag maintains high energy absorbing ability at the time of an airbag being expanded, excellent shape stability, air blocking effects, folding property, toughness, tear strength, edgecomb resistance, and gas barrier performance, and thus can be effectively applied to the fabric for an airbag.

Further, the fabric for an airbag has excellent physical properties at room temperature, and can maintain excellent mechanical properties and air-tightness even after it is aged under severe conditions of high temperature and high humidity.

More particularly, the tenacity of the fabric for an airbag of the present invention that is measured at room temperature according to the ASTM D 5034 method (standard of the American Society for Testing and Materials) may be 220 kgf/inch, or 220 to 350 kgf/inch, and preferably 230 kgf/inch, or 230 to 300 kgf/inch. It is preferable that the tenacity is 220 kgf/inch or more in terms of the properties required for prior airbags. It is also preferable that the tenacity is 350 kgf/inch or less in terms of practical property exhibition.

The breaking elongation of the fabric for an airbag that is measured according to the ASTM D 5034 method (standard of the American Society for Testing and Materials) at room temperature may be 20% or more, or 20% to 60%, and preferably 28% or more, or 28% to 50%. It is preferable that the breaking elongation is 20% or more in terms of the properties required for prior airbags. It is also preferable that the breaking elongation is 60% or less in terms of practical property exhibition.

Furthermore, because the coated fabric for an airbag expands rapidly by the gas of high temperature and high pressure, superior tear strength is required. Therefore, the tear strength that represents the burst strength of the coated fabric for an airbag may be 22 kgf or more, or 22 to 60 kgf, and preferably 25 kgf or more, or 25 to 55 kgf when it is measured according to the ASTM D 2261 method (standard of the American Society for Testing and Materials) at room temperature. Herein, if the tear strength of the coated fabric is below the lowest limit, that is, below 22 kgf, at room temperature, the airbag may burst during the unfolding thereof and it may cause a huge danger in function of the airbag.

The edgecomb resistance of the fabric for an airbag of the present invention that is measured according to the ASTM D 6479 method (standard of the American Society for Testing and Materials) at room temperature (25 °C) may be 350 N or more, or 350 to 1000 N, and preferably 380 N or more, or 380 to 970 N. Further, the edgecomb resistance of the polyester fabric that is measured at 90 °C may be 300 N or more, or 300 to 970 N, and preferably 320 N or more, or 320 to 950 N. In this case, when each of the edgecomb resistance of the polyester fabric that is measured at room temperature (25 °C) and 90 °C is less than 350 N and 300 N, abrupt deterioration of the strength along the seam line of the airbag cushion undesirably occurs in the event of airbag unfolding, so that the fabric is susceptible to rupture due to occurrence of pin holes and seam puckering during the airbag unfolding.

The warp-wise and weft-wise shrinkage rates of the fabric for an airbag that are measured according to ASTM D 1776 method may be 4.0% or less, and preferably 2.0% or less, respectively. Herein, it is most preferable that the warp-wise and weft-wise shrinkage rates do not exceed 1.0%, in terms of shape stability of the fabric.

The air permeability of the fabric that is measured according to ASTM D 737 method (standard of the American Society for Testing and Materials) at room temperature may be 10.0 cfm or less, or 0 to 10.0 cfm, or 0.5 to 10.0 cfm. Particularly, the air permeability of the fabric for an airbag can be apparently lowered by forming a coating layer of a rubber material on the fabric, which is possible to lower the air permeability to near 0 cfm. The air permeability of the coated fabric of the present invention may be 1,4 cfm or less, or 0 to 1.4 cfm. However, unless the rubber-material is coated thereon, the air permeability of the non-coated fabric of the present invention that is measured according to the ASTM D 737 method (standard of the American Society for Testing and Materials) at room temperature may be 10.0 cfm or less, or 0 to 10.0 cfm, preferably 3.5 cfm or less, or 0 to 3.5 cfm. In this case, if the air permeability of the non-coated fabric of the present invention is over 10.0 cfm, and more preferably over 3.5 cfm, or if the air permeability of the coated fabric is over 1.4 cfm, it may be undesirable in terms of maintaining the air-tightness of the fabric for an airbag.

Furthermore, the stiffness of the fabric for an airbag of the present invention that is measured according to the ASTM D 4032 method (standard of the American Society for Testing and Materials) at room temperature may be 0.2 kgf or more, or 0.2 to 1.2 kgf, and preferably 0.5 kgf or more, or 0.5 to 1.0 kgf. Particularly, the stiffness may be 1.2 kgf or less when the fiber is 530 denier or more, and the stiffness may be 0.8 kgf or less when the fiber is less than 460 denier.

It is preferable that the fabric of the present invention maintains its stiffness in the above range, in order to effectively use it for an airbag. If the stiffness is too low such as below 0.2 kgf, it may not function as a sufficient protecting support when the airbag is expanded, and packing property may also be deteriorated when it is installed in a vehicle because its shape stability deteriorates. Furthermore, in order to prevent the fabric from becoming too rigid to fold, to prevent the packing property from being deteriorated, and to prevent the fabric from being discolored, the stiffness may preferably be 1.2 kgf or less. Particularly, the stiffness may be preferably 0.8 kgf or less in the case of being 460 denier or less, and 1.2 kgf or less in the case of being 530 denier or more.

Still another embodiment of the present invention provides a method of producing a fabric for an airbag by using the polyester fiber. The method of producing the fabric for an airbag of the present invention includes the steps of weaving a raw fabric for an airbag using the polyester yarns, scouring the woven raw fabric for an airbag, and tentering the scoured fabric.

In the present invention, the polyester yarn may be formed into the final fabric for an airbag by the typical weaving, scouring and tentering processes. In this case, the weaving shape of the polyester fabric is not particularly limited. Preferably, the polyester fabric may be a flat-woven type fabric or a one-piece-woven (OPW) type fabric.

Particularly, the fabric for an airbag of the present invention may be manufactured by performing beaming, weaving, scouring and tentering processes using the polyester yarn as a warp and a weft. The fabric may be manufactured using a general weaving machine, and the kind of the weaving machine is not limited. Preferably, the flat-woven type fabric may be manufactured using a Rapier loom, an air jet loom or a water jet loom, and the OPW type fabric may be manufactured using a Jacquard loom.

Furthermore, it is preferable that the fabric for an airbag of the present invention further includes a coating layer coated or laminated on the surface with one or more selected from the group consisting of silicone resin, polyvinylchloride resin, polyethylene resin, polyurethane resin or the like, but the kind of coating resin is not limited to the materials mentioned above. The resin coated layer may be formed by a knife-over-roll coating method, a doctor blade method, or a spray coating method, but it is not limited to the methods mentioned above.

The amount of the coated resin per unit area of the coating layer may be 20 to 200 g/m$^2$, and preferably 20 to 100 g/m$^2$. Particularly, the amount of the coated resin is preferably 30 g/m$^2$ to 95 g/m$^2$ in the case of the OPW (One Piece Woven) type fabric for a side curtain airbag, and preferably 20 g/m$^2$ to 50 g/m$^2$ in the case of the plain type fabric for an airbag.

The coated fabric for an airbag may be formed into an airbag cushion having a certain shape through the processes of tailoring and sewing. The airbag is not limited to any particular shape, and can be prepared in a general form.

Meanwhile, still another embodiment of the present invention provides an airbag system including the airbag. The airbag system may be equipped with a general apparatus that is well known to those skilled in the art. The airbags may be largely classified into frontal airbags and side curtain airbags. The frontal airbags includes an airbag for a driver seat, an airbag for a passenger seat, an airbag for side protection, an airbag for knee protection, an airbag for ankle protection, an airbag for pedestrian protection, and the like. The side curtain airbags are used to protect an occupant at the time of side collision and overturn of a vehicle. Therefore, the airbag of the present invention may be a frontal airbag or a side curtain airbag.

In the present invention, matters other than the above-mentioned contents are not particularly limited because they can be added or omitted according to circumstances.

## EFFECTS OF THE INVENTION

According to the present invention, there is provided a polyester yarn for an airbag having the minimum content of an inorganic filler such as $TiO_2$ or the like and the optimized breaking elongation and dry shirinkage rate, which can be used to produce a fabric for an airbag having excellent mechanical properties, flexibility, and folding property.

This polyester yarn for an airbag shows characteristics of high strength, high elongation and high shirinkage rate, and thus provides excellent shape stability, mechanical properties, and gas barrier effect when applied to the fabric for an airbag. Simultaneously, remarkably reduced stiffness and excellent toughness, tear strength, edgecomb resistance, folding property and flexibility can be secured. Accordingly, when the airbag is mounted in a vehicle, the packing property is remarkably improved and the impact applied to an occupant is minimized at the same time, thereby protecting an occupant safely.

Therefore, the polyester yarn of the present invention and the polyester fabric produced using the same can be very preferably used to manufacture an airbag for a vehicle.

## BEST MODE FOR INVENTION

Hereinafter, the preferred Examples are provided for better understanding of the present invention. However, the following Examples are for illustrative purposes only, and the present invention is not intended to be limited by the following Examples.

Examples 1-5

As shown in the following Table 1, a polyester yarn for an airbag was produced by melt-spinning a PET polymer having a predetermined intrinsic viscosity and a predetermined content of an inorganic filler, and by drawing it.

The PET polymers were melted in a temperature range of 283-295 °C and the molten polyesters were discharged through a spinning nozzle. The discharged molten polyester was passed through a delayed quenching zone composed of a hood-heater and a heat insulating plate, and was delayed-quenched.

Oil was applied to the delayed-quenched polyester fibers by using a roll-type oiling apparatus. At this time, the amount of the oil was 0.8 parts by weight based on 100 parts by weight of the yarn. The used oil was a spinning oil prepared by mixing ethylene oxide/propylene oxide adducted diol ester (30 parts by weight), ethylene oxide adducted diol ester (15 parts by weight), glyceryl triester (10 parts by weight), trimethyl propane triester (10 parts by weight), and a small quantity of an anti-static agent.

The oil-applied yarns were passed through a pre-interlacer, and drawn using a godet roller.

After the drawing, the polyester yarns were prepared by intermingling the drawn yarns by using a second interlacer and winding the same with a winder.

At this time, the intrinsic viscosity of the PET polymer, the CEG content in the molecules, the spinning speed, the spinning tension, and the spinning temperature of the melt-spinning process, the draw ratio, the heat-treating temperature, and relaxation ratio are given in Table 1 below, and other conditions were based on general conditions for producing a polyester yarn.

The physical properties of the polyester yarns produced in Examples 1 to 5 were measured using the following method.

1) Crystallinity

The density (p) of the polyester yarn was measured at 25 °C by a density gradient tube method using n-haptane and carbon tetrachloride, and the crystallinity was calculated by the following Calculation Formula 2 below:

[Calculation Formula 2]

$$X_c\,(crystallinity) = \frac{\rho_c\,(\rho - \rho_a)}{\rho\,(\rho_c - \rho_a)}$$

wherein $\rho$ is density of yarn, $\rho_c$ is density of crystal (in the case of PET, 1.457 $g/cm^3$), and $\rho_a$ is density of noncrystal (in the case of PET, 1.336 $g/cm^3$).

2) Intrinsic viscosity

An emulsion was extracted from a sample using carbon tetrachloride, the sample was melted by OCP (ortho-chloro phenol) at $160\pm2$ °C, and then the viscosity of the sample in a viscosity tube was measured at 25 °C using an automatic viscometer (Skyvis-4000). The intrinsic viscosity (IV) of the polyester yarn was calculated by Calculation Formula 3 below:

[Calculation Formula 3]

Intrinsic viscosity (IV) = {(0.0242 × Rel) + 0.2634} × F

wherein Rel = (seconds of solution × specific gravity of solution × viscosity coefficient) / (OCP viscosity) and F= (IV of the standard chip) / (average of three IV measured from the standard chip with standard action)

3) Tenacity and breaking elongation

The tenacity and breaking elongation of the polyester yarn were measured using a universal material testing machine (Instron) under conditions of a gauge length of 250 mm, a tension rate of 300 mm/min and an initial load of 0.05 g/d.

4) Dry shirinkage rate

The dry shirinkage rate was measured at a temperature of 180 °C and a tension of 30 g for 2 minutes using a Testrite MK-V (manufactured by Testrite Corporation, England).

5) Single yarn fineness

The single yarn fineness was measured according to the method of picking the yarn of 9,000 m by using a reel, weighing the yarn to obtain the total fineness (denier) of the fiber, and dividing the total fineness by the number of filaments.

The production process conditions of the polyester yarns according to Examples 1-5 and the measured physical properties thereof are given in Table 2 below.

[Table 1]

|  | Example 1 | Example 2 | Example 3 | Example 4 | Example 5 |
|---|---|---|---|---|---|
| Inorganic filter content of chip (ppm) | 50 | 30 | 0 | 0 | 0 |
| Intrinsic viscosity of chip (dl/g) | 1.34 | 1.25 | 1.36 | 1.40 | 1.45 |
| Spinning temperature (°C) | 295 | 290 | 296 | 297 | 298 |
| Total draw ratio | 5.6 | 5.56 | 5.5 | 5.52 | 5.44 |
| Relaxation ratio (%) | 3.4 | 4.0 | 4.2 | 4.3 | 4.0 |
| Heat treatment temperature (°C) | 235 | 236 | 240 | 242 | 245 |
| S3* | 119.4 | 98.1 | 68.6 | 69.2 | 68.9 |
| Crystallinity (%) | 44.3 | 44.1 | 43.6 | 43.4 | 43.2 |
| Intrinsic viscosity of yarn (dl/g) | 1.04 | 1.02 | 1.06 | 1.08 | 1.10 |
| Tenacity of yarn (g/ d) | 9.0 | 9.2 | 9.2 | 9.2 | 9.4 |
| Breaking elongation of yarn (%) | 18.0 | 19.2 | 19.5 | 20.5 | 21 |
| Dry shirinkage rate of yarn (%) | 4.2 | 4.5 | 5.2 | 5.6 | 6.0 |
| Sum of breaking elongation/dry shirinkage rate (%) | 22.2 | 23.7 | 24.7 | 26.1 | 27.0 |
| Single yarn fineness of yarn (de) | 7.7 | 7.7 | 8.3 | 4.2 | 4.7 |
| Total fineness of yarn (de) | 460 | 460 | 500 | 500 | 460 |
| Number of filament of yarn | 60 | 60 | 60 | 120 | 120 |
| *S3 = inorganic filler content + (intrinsic viscosity of chip ×10) + (draw ratio ×10) | | | | | |

Comparative Examples 1-5

Polyester yarns of Comparative Examples 1-5 were manufactured in the same manner as in Examples 1-5, except for the conditions given in Table 3 below, and the measured physical properties of the yarns are given in Table 2 below.

[Table 2]

|  | Comparative Example 1 | Comparative Example 2 | Comparative Example 3 | Comparative Example 4 | Comparative Example 5 |
|---|---|---|---|---|---|
| Inorganic filter content of chip (ppm) | 350 | 300 | 250 | 200 | 180 |
| Intrinsic viscosity of chip (dl/g) | 1.05 | 1.03 | 1.07 | 1.07 | 1.09 |
| Spinning temperature (°C) | 302 | 304 | 306 | 307 | 310 |
| Total draw ratio | 6.1 | 6.02 | 6.05 | 6.07 | 6.01 |
| Relaxation ratio (%) | 7.5 | 8.0 | 7.7 | 7.9 | 8.0 |
| Heat treatment temperature (°C) | 180 | 185 | 185 | 188 | 187 |

(continued)

| | Comparative Example 1 | Comparative Example 2 | Comparative Example 3 | Comparative Example 4 | Comparative Example 5 |
|---|---|---|---|---|---|
| S3* | 421.5 | 370.5 | 321.2 | 271.4 | 251.0 |
| Crystallinity (%) | 54.3 | 53.1 | 53.6 | 52.4 | 52.2 |
| Intrinsic viscosity of yarn (dl/g) | 0.893 | 0.891 | 0.890 | 0.887 | 0.875 |
| Tenacity of yarn (g/ d) | 8.0 | 8.2 | 8.0 | 8.1 | 8.1 |
| Breaking elongation of yarn (%) | 13.6 | 13.8 | 13.8 | 13.3 | 13.2 |
| Dry shirinkage rate of yarn (%) | 2.3 | 2.5 | 3.2 | 3.3 | 3.5 |
| Sum of breaking elongation/ dry shirinkage rate (%) | 15.9 | 16.3 | 17.0 | 16.6 | 16.7 |
| Single yarn fineness of yarn (de) | 1.25 | 6.0 | 6.0 | 3.0 | 3.3 |
| Total fineness of yarn (de) | 200 | 240 | 600 | 700 | 800 |
| Number of filament of yarn | 160 | 40 | 50 | 230 | 240 |
| *S3 = inorganic filler content + (intrinsic viscosity of chip $\times$10) + (draw ratio $\times$10) | | | | | |

Preparation Examples 1-5

Raw fabrics for an airbag was woven at a weaving density of 53$\times$53 (warp $\times$ weft) from the polyester yarns prepared according to Examples 1-5 by using a Rapier Loom, and were prepared into polyester fabrics for an airbag through the scouring and tentering processes. Then, a polyvinylchloride (PVC) resin was coated at a coating amount of 25 g/m$^2$ on the fabrics with a knife-over-roll coating method to obtain PVC coated fabrics.

The physical properties of the polyester fabrics for an airbag, manufactured using the polyester yarns of Examples 1-5, were measured using the following method.

(a) Tenacity and breaking elongation

The fabric sample was cut from the fabric for an airbag, and fixed at the lower clamp of the apparatus for measuring the tenacity according to ASTM D 5034 (standard of the American Society for Testing and Materials). Thereafter, while moving the upper clamp upwardly, the tenacity and the elongation at the time when the fabric sample was broken were measured.

(b) Tear strength

The tearing strength of the fabric for an airbag was measured according to ASTM D 2261 (standard of the American Society for Testing and Materials).

(c) Warpwise and weftwise shirinkage rates

The warpwise and weftwise shirinkage rates of the fabric were measured according to ASTM D 1776 (standard of the American Society for Testing and Materials). First, a sample is cut from the fabric for an airbag to a length of 20 cm which is a length before warpwise and weftwise shirinkage, and then heat-treated in a chamber at 149 °C for 1 hour, and then the length thereof was measured. Based on this measured length, the warpwise and weftwise shirinkage ratios {[(length before shrinkage - length after shrinkage)/ (length before shrinkage)] x 100} were measured.

(d) Stiffness

The stiffness of the fabric was measured by a circular bend method using a stiffness tester according to ASTM D 4032 (standard of the American Society for Testing and Materials). Further, the stiffness thereof may be measured by a cantilever method. The stiffness thereof may be measured by measuring the length of the bent fabric using a cantilever meter which is a tester inclined at a predetermined angle in order to bend the fabric.

(e) Thickness

The thickness of the fabric for an airbag was measured according to ASTM D 1777 (standard of the American Society for Testing and Materials).

(f) Air permeability

The amount of air (pressure of 125 Pa) permeating the circular section (area: 38 $cm^2$) of a fabric for an airbag was measured after leaving the fabric under conditions of 20 °C and 65% RH for 1 day or more according to ASTM D 737 (standard of the American Society for Testing and Materials).

(g) Edgecomb resistance

The edgecomb resistance of the fabric, which was a noncoated fabric before coating treatment, were measured by the method according to ASTM D 6479 (standard of the American Society for Testing and Materials) at room temperature (25 °C).

The results of measuring the physical properties of the polyester fabrics for an airbag produced in Preparation Examples 1-5 are given in Table 3 below.

**[Table 3]**

|  | Preparation Example1 | Preparation Example2 | Preparation Example3 | Preparation Example4 | Preparation Example5 |
|---|---|---|---|---|---|
| Tenacity of fabric (kgf/ inch) | 243 | 245 | 247 | 254 | 255 |
| Breaking elongation of fabric (%) | 40 | 42 | 38 | 43 | 45 |
| Tear strength of fabric (kgf) | 20 | 21 | 22 | 23 | 25 |
| Stiffness of fabric (kgf) | 0.55 | 0.45 | 0.47 | 0.43 | 0.43 |
| Air permeability of fabric (cfm) | 0.8 | 0.8 | 0.7 | 0.6 | 0.5 |
| Edgecomb resistance of fabric (N) | 601 | 615 | 617 | 625 | 635 |

Comparative Preparation Examples 1-5

Polyester fabrics for an airbag were manufactured in the same manner as in Preparation Examples 1-5, except for using the polyester yarns produced in Comparative Examples 1-5, and the measured physical properties thereof are given in Table 4 below.

[Table 4]

| | Comparative Preparation Example 1 | Comparative Preparation Example 2 | Comparative Preparation Example 3 | Comparative Preparation Example 4 | Comparative Preparation Example 5 |
|---|---|---|---|---|---|
| Tenacity of fabric (kgf/ inch) | 232 | 234 | 232 | 239 | 235 |
| Breaking elongation of fabric (%) | 30 | 34 | 32 | 33 | 34 |
| Tear strength of fabric (kgf) | 16 | 16 | 17 | 16 | 18 |
| Stiffness of fabric (kgf) | 1.4 | 1.3 | 1.1 | 1.2 | 1.1 |
| Air permeability of fabric (cfm) | 2.0 | 1.8 | 1.9 | 1.8 | 2.0 |
| Edgecomb resistance of fabric (N) | 289 | 295 | 303 | 312 | 315 |

As shown in Table 3, it can be recognized that the fabrics for an airbag of Preparation Examples 1-5, which were prepared from the polyester yarns of Examples 1-5 having the minimum content of inorganic filler such as $TiO_2$ or the like and the optimized breaking elongation and dry shirinkage rate, showed remarkably reduced stiffness and excellent toughness, tear strength, edgecomb resistance, and gas barrier performance. Particularly, with respect to the fabrics for an airbag of Preparation Examples 1-5, the tenacity was improved from 16-18 kgf to 20-25 kgf, and the edgecomb resistance was remarkably improved from 470-490 N to 600-635 N.

On the contrary, as shown in Table 4, it is recognized that the fabrics for an airbag of Comparative Preparation Examples 1-5 that were prepared by using the polyester yarns of Comparative Examples 1-5 do not satisfy such characteristics. Particularly, the fabric for an airbag of Comparative Preparation Example 1, which was produced using the yarn of Comparative Example 1 having the highest S3 value of 421.5, showed the tear strength of only 16 kgf, and the lowest edgecomb resistance of 289 N. Therefore, when an airbag is manufactured using this fabric and installed in a vehicle, the airbags may be ruptured or the outer seams may be tensioned upon unfolding the airbag, and thus the airbag does not work at the time of collision, thereby not assuring the safety of an occupant.

**Claims**

1. A polyester yarn, wherein the content of one or more inorganic fillers selected from the group consisting of $TiO_2$, $SiO_2$, and $BaSO_4$ is 200 ppm or less, a breaking elongation is 15% or more, a dry shirinkage rate is 3% or more, and the sum of the breaking elongation and the dry shirinkage rate is 20% or more.

2. The polyester yarn according to Claim 1, wherein an intrinsic viscosity is 0.8 dl/g or more.

3. The polyester yarn according to Claim 1, wherein a crystallinity is 42% to 52%

4. The polyester yarn according to Claim 1, wherein a tenacity is 9.0 g/d or more and a toughness value is $30 \times 10^{-1}$ g/d or more.

5. The polyester yarn according to Claim 1, wherein the yarn has a single yarn fineness of 0.5 to 20 denier.

6. The polyester yarn according to Claim 1, wherein the yarn has a total fineness of 200 to 1,000 denier.

7. The polyester yarn according to Claim 1, wherein the yarn has the number of filaments of 50 to 240.

8. A method for producing the polyester yarn according to any one of Claims 1 to 7, comprising the steps of:

   melt-spinning a polyester polymer having a content of one or more inorganic fillers selected from the group consisting of $TiO_2$, $SiO_2$, and $BaSO_4$ of 200 ppm or less at 270 to 300 °C so as to prepare an undrawn polyester yarn, and
   drawing the undrawn polyester yarn.

9. The polyester yarn according to Claim 8, wherein the polyester polymer includes 70 mol% or more of poly(ethylene terephthalate).

10. The method according to Claim 8, wherein an intrinsic viscosity of the polyester polymer is 0.85 dl/g or more.

11. The method according to Claim 8, wherein the drawing process is carried out at a draw ratio of 5.0 to 6.0.

12. The method according to Claim 8, wherein a function value of the following Calculation Formula 1, based on the content of the inorganic filler in the polyester polymer, the intrinsic viscosity of the polyester polymer, and the draw ratio during the drawing process, is 50 or more and 190 or less:

$$[\text{Calculation Formula 1}]$$

$$50 \leq a_1 + a_2 + a_3 \leq 190$$

wherein

   $a_1$ is the absolute value of the inorganic filler content (ppm) in the polyester polymer,
   $a_2$ is the value resulting from multiplying the absolute value of the intrinsic viscosity (dl/g) of the polyester polymer by 10, and
   $a_3$ is the value resulting from multiplying the draw ratio in the drawing process by 10.

13. The method according to Claim 8, wherein the difference in the intrinsic viscosity between the polyester polymer and the yarn is 0.5 dl/g or less.

14. The method according to Claim 8, wherein the spinning process is carried out at a spinning speed of 300 m/min to 1,000 m/min.

15. The method according to Claim 8, wherein the drawing process is carried out after passing the undrawn polyester yarn through a godet roller with an oil pickup amount of 0.2% to 2.0%.

16. The method according to Claim 8, further comprising the step of performing a relaxation process at a relaxation ratio of 1% to 7% after the step of drawing the undrawn yarn.

17. A polyester fabric for an airbag, comprising the polyester yarn according to any one of Claims 1 to 7.

18. The polyester fabric for an airbag according to Claim 17, wherein the tear strength of the fabric measured according to the ASTM D 2261 method (standard of the American Society for Testing and Materials) is 20 kgf or more.

19. The polyester fabric for an airbag according to Claim 17, wherein the edgecomb resistance of the fabric measured according to the ASTM D 6479 method (standard of the American Society for Testing and Materials) at room temperature (25 °C) is 350 N or more.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI04214437 B